Europäisches Patentamt

**European Patent Office**

Office européen des brevets

(19)

(11) Numéro de publication: **0 038 245**
**A1**

(12)

# DEMANDE DE BREVET EUROPEEN

(21) Numéro de dépôt: 81400525.2

(22) Date de dépôt: 01.04.81

(51) Int. Cl.³: **A 01 K 85/00**

(30) Priorité: 15.04.80 FR 8008936

(43) Date de publication de la demande: 21.10.81
Bulletin 81/42

(84) Etats contractants désignés: AT BE CH DE FR GB IT LI
LU NL SE

(71) Demandeur: Le Barber, Emmanuel, Route Nationale La
Roche-Maurice, F-29220 Landerneau (FR)

(72) Inventeur: Le Barber, Emmanuel, Route Nationale La
Roche-Maurice, F-29220 Landerneau (FR)

(74) Mandataire: Le Guen, Louis François, 13, rue Emile Bara
BP 91, F-35802 Dinard Cedex (FR)

(54) Leurre de pêche du genre cuiller.

(57) La cuiller a un corps de révolution (1) enfilé sur une
tige (2) sur laquelle est monté un étrier (3) auquel est
accrochée une palette (5), avec le bout libre (21) de la tige
(2) à accrocher au fil de ligne et un hameçon (6) accroché à
l'arrière du corps (1).

Le corps (1) a une section transversale qui croît depuis
le nez (7) jusqu'à une zone intermédiaire (8) et qui décroît
ensuite vers l'arrière (9), la zone intermédiaire (8) étant plus
proche du nez (7) que de l'arriére (9) du corps (1). La surface
(10) de la zone intermédiaire (8) comporte une nervure
circulaire (11) dont la section a la forme d'un V saillant, dans
laquelle peuvent être faites des encroches. Le corps (1) est
percé d'un trou axial (12) pour le passage de ladite tige (2),
le trou (12) se terminant, à l'avant, par une cuvette coaxiale
(13), ouverte vers l'avant et où se loge une bille (22) du
diamètre de la cuvette (13), un coussinet (23) en forme de
perle étant intercalé entre la bille (22) et le fond de la cuvette
(13). L'œillet avant (25) de l'étrier (3) enfilé sur la tige (2) se
raccorde à la partie en U de l'étrier (3) en formant une arête
nette.

**Leurre de pêche du genre cuiller.**

La présente invention concerne des perfectionnements et améliorations apportées aux cuillers.

Il est bien connu que les cuillers fonctionnent mieux, c'est à dire sont plus attractives, quand leurs palettes tournent dès l'immersion et également quand elles émettent des vibrations sonores.

Un objet de la présente invention consiste précisément à prévoir des cuillers comportant des moyens qui améliorent ces deux points.

Suivant une caractéristique de l'invention, il est prévu une cuiller à corps de révolution enfilé sur une tige sur laquelle est monté un étrier auquel est accrochée une palette, avec le bout libre de la tige à accrocher au fil de ligne et un hameçon accroché à l'arrière du corps, le corps ayant une section transversale qui croît depuis le nez jusqu'à une zone intermédiaire et qui décroît ensuite vers l'arrière, la zone intermédiaire étant plus proche du nez que de l'arrière du corps.

Suivant une autre caractéristique, la surface de la zone intermédiaire comporte une nervue circulaire dont la section a la forme d'un V saillant, dans laquelle peuvent être faites des encoches.

Suivant une autre caractéristique, le corps est percé d'un trou axial pour le passage de ladite tige, le trou se terminant, à l'avant, par une cuvette coaxiale, ouverte vers l'avant et où se loge un bille du diamètre de la cuvette, un coussinet en forme de perle étant intercalé entre la bille et le fond de la cuvette.

Suivant une autre caractéristique, ledit étrier est relativement allongé.

Suivant une autre caractéristique, l'oeillet avant de l'étrier enfilé sur la tige se raccorde à la partie en U de l'étrier en formant une arête nette.

Suivant une autre caractéristique, le trou du corps débouche à l'arrière dans une fente méridienne qui loge l'extrémité en T de la tige, un trou perpendiculaire à la fente étant prévu pour recevoir une cheville d'accrochage de la hampe de l'hameçon.

Suivant une autre caractéristique, devant la tige est prévue une seconde tige repliée sur laquelle est serrée un plomb en forme de tête de poisson.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue en coupe longitudinale d'une cuiller suivant l'invention,

la Fig. 2 est une vue en élévation d'une palette utilisable dans la cuiller de la Fig. 1,

la Fig. 3 est une coupe de la partie arrière de la cuiller de la Fig. 1, suivant un plan perpendiculaire au plan de coupe de la Fig. 1,

la Fig. 4 est une vue en perspective d'un étrier utilisé dans la cuiller de la Fig. 1 et auquel est accrochée la palette,

la Fig. 5 est une vue en plan d'une cuiller à tête de plomb comportant un corps de cuiller suivant l'invention, et

la Fig. 6 est une vue schématique d'un détail de la cuiller de la Fig. 5.

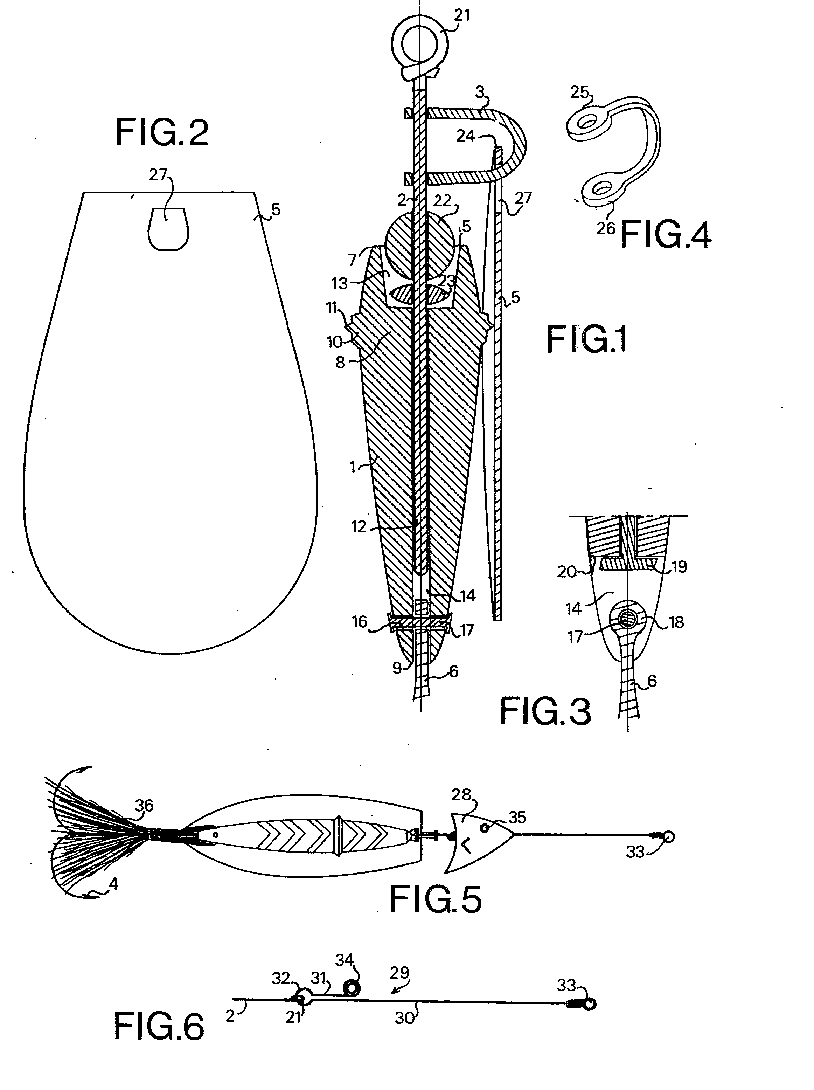

La cuiller de la Fig. 1 comprend un corps de révolution 1 enfilé sur une tige 2, sur laquelle est monté un étrier 3 auquel est accroché une palette 5. A l'arrière du corps 1, est accroché un hameçon dont on n'a représenté que le départ de la tige 6.

Le corps 1 a une section transversale circulaire qui croît depuis le nez 7 jusqu'à une zone 8 et qui décroît ensuite régulièrement jusqu'à l'extrémité arrière 9. La distance axiale entre le nez 7 et la zone de diamètre maximal 8 est nettement plus grande que la distance axiale entre la zone 8 et l'extrémité 9. Il en résulte que le corps 1 a la forme générale d'un poisson, contrairement au corps de cuillers connues qui sont plus grosses à l'arrière qu'à l'avant.

La zone 8 présente, de plus, une partie renflée formant une sorte de bague 10 laquelle présente, sensiblement à mi-hauteur, une nervure circulaire 11 dont la section a la forme d'un V saillant. La bague 10, avec sa nervure 11, peut ne former qu'une pièce unique avec le reste du corps 1 ou bien être sertie sur celui-ci. On verra dans la suite le rôle de la nervure 11.

Le corps 1 est, par ailleurs, percé d'un trou axial 12, qui se termine, à l'avant, par une cuvette coaxiale 13, ouverte vers l'avant, et, à l'arrière, par une fente méridienne 14, ouverte vers l'arrière. Le diamètre du cercle formant le bord 15 de la cuvette 13 est presqu'aussi grand que celui du nez 7. Perpendiculairement au plan méridien de la fente 14, est percé un trou 16 dont l'axe coupe celui du trou 12. Dans le trou 16, est enfilé une cheville 17, sur laquelle est accrochée, dans la fente, la boucle d'accrochage 18 de la tige 6 de l'hameçon. L'hameçon 4 est libre de tourner autour de l'axe 17, sa tige 6 se balançant dans la fente 14, dont la largeur doit bien sûr être prévue suffisamment grande pour ne pas gêner les mouvements de l'hameçon. Dans le trou 12, est enfilée la tige 2, dont l'extrémité arrière se termine en T, dont les deux branches de la barre 19 reposent au fond 20 de la fente 14. A l'avant, la tige 2 se termine par une boucle 21 que l'on accroche au bout de la ligne.

Par ailleurs, sont enfilés successivement sur la tige 2, en partant de la boucle 21, l'étrier 3, une bille 22 et une perle 23. La bille 22 est métallique, comme le corps 1, et a un diamètre légèrement inférieur à celui du cercle 15. La perle 23 a la forme générale d'une lentille trouée dont le diamètre est un peu inférieur à celui du fond de la cuvette 13. Quand la cuiller est ramenée dans l'eau, la bille 22 applique la perle 23 contre le fond de la cuvette. La bille 22 a pour effet d'améliorer la forme hydrodynamique du corps de la cuiller, tout en ayant un mouvement de rotation sensiblement indépendant de celui du corps 1. La perle 23 est en une matière appropriée, telle que du téflon, pour jouer le rôle de coussinet entre la bille 22 et le fond de la cuvette 13.

L'étrier 3, comme le montrent les Figs. 1 et 4, est relativement allongé de manière à écarter notablement le bord avant 24 de la palette 5 de l'axe de la tige 12. Pratiquement, la dimension transversale de l'étrier est légèrement supérieure au diamètre de la nervure 11 de manière qu'au repos, la palette 5 accrochée à l'étrier et reposant contre la nervure 11 soit presque parallèle à l'axe de la tige 2. Par ailleurs, l'oeillet avant 25 de l'étrier 3 se raccorde à la partie en U de l'étrier en formant une arête nette. Autrement dit, si on développe l'étrier 3, le bord externe de l'oeillet 25 est circulaire jusqu' au point de rencontre avec la partie plus étroite, tandis que le bord de l'oeillet arrière 26 peut se raccorder progressivement avec la partie plus étroite. On évite ainsi toute possibilité de coincer le trou 27 de la palette 5 sur l'oeillet 25, ce qui se produit avec des palettes connues au cours du lancer. L'impact de la palette sur l'eau, à son entrée dans celle-ci, est donc plus important si bien que la mise en rotation de la palette est plus rapide.

La nervure 11 peut être encochée de manière que la palette 5 en frottant sur l'arête interrompue par les encoches, produise des sons. Le profil en V de 11 permet au pêcheur d'encocher lui-même le bord de manière à obtenir les vibrations sonores modulées qu'il choisit pour attirer le poisson qu'il pêche.

La longueur de la palette 5 est, de préférence, assez courte, de l'ordre de grandeur de la longueur du corps, de manière à amplifier les vibrations sonores émises par son frottement sur la nervure 11.

La boucle 21 d'accrochage de la ligne est de dimension très réduite.

La cuiller de la Fig. 5 comprend naturellement un corps 1, un étrier 3 et une palette 5. Elle traîne un hameçon avec pompon 36. Les fils ou laines rouges formant le pompon sont passés dans la fente 14 entre l'oeillet de la tige de l'hameçon et le T de la tige 2. Ils sont ensuite ligaturés sur la hampe 6 de l'hameçon. Dans la zone de la fente, les fils ou laines sont maintenus par une petite gaine, par exemple en matière plastique, pour, d'une part, éviter des effilochages et, d'autre part, de pas gêner le mouvement de l'hameçon dans la fente. A l'avant de la boucle 21, est fixée un plomb 28 qui est serti sur une attache 29, qui est montrée à la Fig. 6. L'attache 29 comprend une partie longue droite 30 et une partie 31 plus courte repliée le long de 30. Les parties 30 et 31 sont réunies par un arc de cercle 32; qui est enfilé dans la boucle 21. L'extrémité avant de 30 est en forme de boucle 33 pour l'accrochage de la ligne. L'extrémité avant de 31 est spiralée, en 34, en s'écartant de 30. Le plomb 28 a la forme d'une tête de poisson et est serti sur les parties adjacentes de 30 et 31. De plus, un rivet 35, traversant le plomb 28, est enfilé dans le trou de la spirale 34. Les bouts du rivet 35 simulent les yeux de la tête de poisson. La pointe avant du plomb 28 coïncide avec la tige 30 de manière à éviter tout accrochage dans des herbes.

REVENDICATIONS

1) Cuiller à corps de révolution (1) enfilé sur une tige (2) sur laquelle est monté un étrier (3) auquel est accrochée une palette (5), avec le bout libre (21) de la tige (2) à accrocher au fil de ligne et un hameçon (6) accroché à l'arrière du corps (1), caractérisée en ce que le corps (1) a une section transversale qui croît depuis le nez (7) jusqu'à une zone intermédiaire (8) et qui décroît ensuite vers l'arrière (9), la zone intermédiaire (8) étant plus proche du nez (7) que de l'arrière (9) du corps (1).

2) Cuiller suivant la revendication 1, caractérisée en ce que la surface (10) de la zone intermédiaire (8) comporte une nervure circulaire (11) dont la section a la forme d'un V saillant, dans laquelle peuvent être faites des encoches.

3) Cuiller suivant la revendication 1 ou 2, caractérisée en ce que le corps (1) est percé d'un trou axial (12) pour le passage de ladite tige (2), le trou (12) se terminant, à l'avant, par une cuvette coaxiale (13), ouverte vers l'avant et où se loge une bille (22) du diamètre de la cuvette (13), un coussinet (23) en forme de perle étant intercalé entre la bille (22) et le fond de la cuvette (13).

4) Cuiller suivant l'une des revendications 1 à 3, caractérisée en ce que ledit étrier (3) est relativement allongé.

5) Cuiller suivant l'une des revendications 1 à 4, caractérisée en ce que l'oeillet avant (25) de l'étrier (3) enfilé sur la tige (2) se raccorde à la partie en U de l'étrier (3) en formant une arête nette.

6) Cuiller suivant une des revendications 3 à 5, caractérisée en ce que le trou (12) du corps (1) débouche à l'arrière dans une fente méridienne (14) qui loge l'extrémité en T (19) de la tige (2), un trou perpendiculaire (16) à la fente (14) étant prévu pour recevoir une cheville d'accrochage (17) de la hampe de l'hameçon (6).

7) Cuiller suivant l'une des revendications 1 à 6, caractérisée en ce que, devant la tige (2), est prévue une seconde tige (30) repliée sur laquelle est serrée un plomb (28) en forme de tête de poisson.

PI. Unique

0038245

FIG.2

FIG.1

FIG.4

FIG.3

FIG.5

FIG.6

| Catégorie | Citation du document avec indication, en cas de besoin, des parties pertinentes | Revendication concernée |
|---|---|---|
| X | <u>FR - A - 1 036 886</u> (CATALLO)<br>* En entier *<br><br>-- | 1,4 |
| | <u>FR - A - 1 074 651</u> (THORENS)<br>* En entier *<br><br>-- | 1,4,5 |
| | <u>FR - A - 1 551 183</u> (BARON)<br>* Page 1, colonne de droite -<br>page 2, colonne de gauche;<br>figures 1,4 *<br><br>-- | 1,2,4 |
| | <u>FR - A - 1 294 840</u> (FORESTIER)<br>* Page 1, colonne de droite -<br>page 2, colonne de gauche; fi-<br>gures 1,2 *<br><br>-- | 1,3 |
| | <u>FR - A - 1 158 628</u> (MARTIN)<br>* Figures 1,7 *<br><br>-- | 1,3 |
| | <u>US - A - 2 545 398</u> (WAROBIEW)<br>* Colonne 1, ligne 31 - colonne<br>2, ligne 8; figures 1,2 *<br><br>-- | 1,6 |
| | <u>FR - A - 937 378</u> (CHAUVOT)<br>* Page 2, lignes 16-86; figures<br>1,2,6-8 *<br><br>---- | 1,4,7 |

**DOCUMENTS CONSIDERES COMME PERTINENTS**

CLASSEMENT DE LA DEMANDE (Int. Cl.³)

A 01 K 85/00

DOMAINES TECHNIQUES RECHERCHES (Int. Cl.³)

A 01 K

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 03-07-1981 | VILBIG |

OEB Form 1503.1  06.78